(19) Europäisches Patentamt
European Patent Office
Office européen des brevets

(11) **EP 4 209 632 A1**

(12) **EUROPEAN PATENT APPLICATION**
published in accordance with Art. 153(4) EPC

(43) Date of publication:
**12.07.2023 Bulletin 2023/28**

(21) Application number: **21864269.2**

(22) Date of filing: **30.08.2021**

(51) International Patent Classification (IPC):
**D06M 15/256** (2006.01)    **D01F 9/145** (2006.01)
**H01M 4/13** (2010.01)    **H01M 4/62** (2006.01)
**D06M 101/40** (2006.01)

(52) Cooperative Patent Classification (CPC):
**D01F 9/145; D06M 15/256; H01M 4/13; H01M 4/62;**
D06M 2101/40; Y02E 60/10

(86) International application number:
**PCT/JP2021/031669**

(87) International publication number:
**WO 2022/050211 (10.03.2022 Gazette 2022/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.09.2020 JP 2020146639**

(71) Applicant: **Teijin Limited
Osaka 530-0005 (JP)**

(72) Inventors:
• **YACHI, Kazuki
Osaka-shi, Osaka 530-0005 (JP)**
• **DAIDO, Takahiro
Osaka-shi, Osaka 530-0005 (JP)**

(74) Representative: **Carpmaels & Ransford LLP
One Southampton Row
London WC1B 5HA (GB)**

(54) **RESIN-BONDED FIBER, AND ACTIVE MATERIAL LAYER , ELECTRODE, AND NONAQUEOUS ELECTROLYTE SECONDARY BATTERY USING SAME**

(57)    The present invention provides a resin-attached fiber characterized by: including conductive fibers having an average fiber diameter of 10-5000 nm and an average aspect ratio of 30 or greater, and a thermoplastic resin that is integrated with the conductive fibers by contacting the surface of at least a portion of the conductive fibers; and the powder volume resistivity of the resin-attached fiber being 10 $\Omega$•cm or less when the density is 0.8 g/cm$^3$.

[Fig. 1]

EP 4 209 632 A1

## Description

### Technical Field

The present invention relates to resin-attached fiber used as an electroconductive material and an active material layer, an electrode, and a non-aqueous electrolyte secondary battery formed using the resin-attached fiber.

### Background Art

The active material layer of a lithium secondary battery contains at least an active material that may store and release lithium ions, and generally uses an electroconductive material for improving electron conductivity and a binding agent for binding them together. In a case where the lithium secondary battery is an all-solid-state lithium secondary battery, a solid electrolyte is further contained.

When the lithium secondary battery is charged/discharged, the active material swells/shrinks, and therefore the active material layer is required to have improved strength and to maintain contact points between particles contained in the active material layer for repeated charge and discharge cycles. Further, also from the viewpoint of increasing the size of the battery, the active material layer is required to have improved strength. Particularly, in the case of the all-solid-state lithium secondary battery whose electrolyte is a solid electrolyte, it is absolutely necessary to maintain contact points between particles constituting the active material layer and the electrolyte layer, and therefore there is a higher demand for improving strength.

In order to improve the strength of the active material layer, use of a binding agent has been proposed (Patent Literature 1). However, a binding agent generally used has no electron conductivity and ion conductivity, and therefore the electron conductivity and ion conductivity of the active material layer reduce so that battery characteristics tend to deteriorate.

Further, it has been proposed that electron conductivity is improved by using carbon fiber (Patent Literatures 1 and 2) and that the strength of the active material layer is improved by using carbon fiber (Patent Literature 3). However, in order to achieve sufficient strength of the active material layer and to maintain contact points between the particles, it is still necessary to add a large amount of a binding agent, and therefore there is a problem of a reduction in ion conductivity.

### Citation List

### Patent Literatures

Patent Literature 1: JP 2010-262764 A
Patent Literature 2: JP 2016-9679 A
Patent Literature 3: WO2014/115852

### Summary of Invention

### Technical Problem

During charge/discharge of the lithium secondary battery, especially the all-solid-state lithium secondary battery, due to swelling/shrinkage of the active material, cracking occurs in the active material layer and contact points between particles in the active material layer are difficult to be maintained. In order to improve the strength of the active material layer and to maintain contact points between the particles, use of a binding agent is effective. However, when a large amount of a binding agent is used, a space into which the electroconductive material and the electrolyte enter reduces. Further, there is a case in which the surface of particles of the active material is covered with the binding agent, which interferes with the electron conductivity and ion conductivity of the active material layer.

It is an object of the present invention to provide resin-attached fiber that is used as an electroconductive material, is capable of producing an active material layer having high strength, and is less likely to interfere with the electron conductivity and ion conductivity of the active material layer. It is also an object of the present invention to provide an active material layer, an electrode, and a non-aqueous electrolyte secondary battery produced using the resin-attached fiber.

**Solution to Problem**

In light of the conventional technique described above, the present inventors have intensively studied and as a result have found that the above objects may be achieved by integrating electroconductive fiber and a binding agent made of a thermoplastic resin by bonding the binding agent to the surface of the electroconductive fiber. This finding has led to the completion of the present invention.

Specifically, when the electroconductive fiber and the thermoplastic resin are integrated by bonding the thermoplastic resin to the electroconductive fiber, a change in the structure of the active material layer is prevented even when the volume of the active material changes in the active material layer, which improves the physical strength of the active material layer. Further, since the electroconductive fiber and the thermoplastic resin are integrated, the thermoplastic resin as a binding agent is prevented from spreading in a film state in the active material layer so that the formation of an insulating layer is prevented. As a result, the ion conductivity and electron conductivity of the active material layer may be maintained at high levels, which makes it possible to prevent an increase in the resistance of the battery.

In order to achieve the above objects, the present invention includes the following aspects.

[1] Resin-attached fiber including:

electroconductive fiber having an average fiber diameter of 10 to 5000 nm and an average aspect ratio of 30 or more; and
a thermoplastic resin integrated with the electroconductive fiber by contact with at least part of surface of the electroconductive fiber, wherein
the resin-attached fiber has a powder volume resistivity of 10 $\Omega \cdot$cm or less at a density of 0.8 g/cm$^3$.

[2] The resin-attached fiber according to [1], wherein a content of the thermoplastic resin is 1 to 70% by mass with respect to a total amount of the electroconductive fiber and the thermoplastic resin.

[3] The resin-attached fiber according to [1] or [2], which has a tap density of 0.001 to 0.1 g/cm$^3$.

[4] The resin-attached fiber according to any one of [1] to [3], wherein the thermoplastic resin has a melting point of 50 to 250°C.

[5] The resin-attached fiber according to any one of [1] to [4], wherein the electroconductive fiber is carbon fiber or nickel fiber.

[6] The resin-attached fiber according to [5], wherein the carbon fiber contains substantially no metallic element.

[7] The resin-attached fiber according to any one of [1] to [6], wherein the thermoplastic resin contains a fluorine atom. The resin-attached fiber according to [1] to [7] is obtained by integrating electroconductive fiber having a predetermined shape and a thermoplastic resin by bonding them together. The resin-attached fiber has a powder volume resistivity of 10 $\Omega \cdot$cm or less as measured when packed at a density of 0.8 g/cm$^3$. The "integrating" herein does not mean a state where the electroconductive fiber and the thermoplastic resin are simply mixed but means a case in which the electroconductive fiber is attached to the thermoplastic resin by passing through one particle of the thermoplastic resin or a state in which the electroconductive fiber is partially covered with the thermoplastic resin.

[8] The resin-attached fiber according to any one of [1] to [7], which contains the thermoplastic resin having at least a particulate shape.

[9] An active material layer for non-aqueous electrolyte secondary batteries, the active material layer including the resin-attached fiber according to any one of [1] to [8].

[10] An electrode for non-aqueous electrolyte secondary batteries, the electrode including the active material layer according to [9].

[11] A non-aqueous electrolyte secondary battery including the electrode according to [10].

**Advantageous Effects of Invention**

The resin-attached fiber according to the present invention is obtained by integrating electroconductive fiber that functions as an electroconductive material and a thermoplastic resin that functions as a binding agent by bonding them together, and is therefore capable of producing an active material layer having high strength. Further, the active material layer produced using the resin-attached fiber may maintain ion conductivity and electron conductivity at high levels even when the volume of an active material changes due to charge/discharge. Therefore, the active material layer formed using the resin-attached fiber according to the present invention may reduce battery resistance and makes it possible to provide a non-aqueous electrolyte secondary battery having excellent cycle characteristics.

**Brief Description of Drawings**

Fig. 1 is a photograph taken by a scanning electron microscope (SEM) in substitution for a diagram, which shows resin-attached fiber produced in Example 4.

Fig. 2 is a photograph taken by a scanning electron microscope (SEM) in substitution for a diagram, which shows resin-attached fiber produced in Example 5.

Fig. 3 is a photograph taken by a scanning electron microscope (SEM) in substitution for a diagram, which shows a case in which electroconductive fiber and a thermoplastic resin are simply mixed (Comparative Example 3).

**Description of Embodiments**

(1) Resin-attached fiber

Resin-attached fiber according to the present invention includes electroconductive fiber and a thermoplastic resin, and is preferably substantially consisted of electroconductive fiber and a thermoplastic resin and is more preferably consisted of electroconductive fiber and a thermoplastic resin. In the resin-attached fiber, the electroconductive fiber and the thermoplastic resin are integrated (form a composite) by direct bonding. The "integrated" herein does not mean a state in which the electroconductive fiber and the thermoplastic resin are simply mixed but means, for example, a case in which the electroconductive fiber is attached to the thermoplastic resin by adhering and/or sticking to the surface of one particle (spherical particle) of the thermoplastic resin, a case in which the electroconductive fiber is attached to the thermoplastic resin by passing through one particle of the thermoplastic resin, or a state in which the electroconductive fiber is partially covered with the thermoplastic resin. Particularly, it is preferred that at least part of the thermoplastic resin adhering to the electroconductive fiber is in a particulate form. The "particulate" herein means that a particle has an aspect ratio of 5 or less, preferably 2 or less, more preferably 1.5 or less. Specifically, the resin-attached fiber according to the present invention is produced by, for example, a method in which a solution of the thermoplastic resin in which the electroconductive fiber is dispersed is spray dried, a method in which a monomer solution and the electroconductive fiber are mixed and polymerization is performed, or a method in which the thermoplastic resin is deposited in a solvent in which the electroconductive fiber is dispersed. The resin-attached fiber according to the present invention is not a product obtained by mixing the electroconductive fiber and particles of the thermoplastic resin and bonding them together by another third component but a product obtained by integrating the electroconductive fiber and the thermoplastic resin by direct bonding. Such an integrated state can be confirmed by, for example, a SEM image.

The resin-attached fiber according to the present invention has a powder volume resistivity of 10 $\Omega$·cm or less when packed at a density of 0.8 g/cm$^3$. The premise is that the resin-attached fiber according to the present invention does not include resin-attached fiber that cannot be packed at a density of 0.8 g/cm$^3$. The upper limit of the powder volume resistivity at the time when the resin-attached fiber according to the present invention is packed at a density of 0.8 g/cm$^3$ is preferably 5 $\Omega$·cm or less, more preferably 3 $\Omega$·cm or less, even more preferably 2.5 $\Omega$·cm or less, even more preferably 1 $\Omega$·cm or less, even more preferably 0.5 $\Omega$·cm or less. The lower limit of the powder volume resistivity at the time when the resin-attached fiber according to the present invention is packed at a density of 0.8 g/cm$^3$ is not particularly limited but is 0.001 $\Omega$·cm or more, more specifically 0.01 $\Omega$·cm or more.

The powder volume resistivity at the time when the resin-attached fiber according to the present invention is packed at a density of 0.5 g/cm$^3$ is preferably 20 $\Omega$·cm or less, more preferably 10 $\Omega$·cm or less, even more preferably 5 $\Omega$·cm or less, even more preferably 1 $\Omega$·cm or less. The lower limit of the powder volume resistivity at the time when the resin-attached fiber according to the present invention is packed at a density of 0.5 g/cm$^3$ is not particularly limited but is 0.001 $\Omega$·cm or more, more specifically 0.01 $\Omega$·cm or more.

The powder volume resistivity at the time when the resin-attached fiber according to the present invention is packed at a density of 1.0 g/cm$^3$ is preferably 5 $\Omega$·cm or less, more preferably 3 $\Omega$·cm or less, even more preferably 2 $\Omega$·cm or less, even more preferably 1 $\Omega$·cm or less, even more preferably 0.1 $\Omega$·cm or less. The lower limit of the powder volume resistivity at the time when the resin-attached fiber according to the present invention is packed at a density of 1.0 g/cm$^3$ is not particularly limited but is 0.001 $\Omega$·cm or more, more specifically 0.01 $\Omega$·cm or more.

Further, the resin-attached fiber according to the present invention preferably has a tap density of 0.001 to 0.1 g/cm$^3$. The lower limit of the tap density is more preferably 0.005 g/cm$^3$ or more, even more preferably 0.010 g/cm$^3$ or more, even more preferably 0.012 g/cm$^3$ or more. The upper limit of the tap density is more preferably 0.070 g/cm$^3$ or less, even more preferably 0.065 g/cm$^3$ or less, even more preferably 0.050 g/cm$^3$ or less, even more preferably 0.040 g/cm$^3$ or less, even more preferably 0.030 g/cm$^3$ or less. When the tap density is less than 0.001 g/cm$^3$, it is considered that the content of the thermoplastic resin is too large or the electroconductive fiber is curled, and therefore the effect of improving electric conductivity is low in comparison to the amount of the thermoplastic resin added. If the tap density exceeds 0.1 g/cm$^3$, it is considered that the content of the thermoplastic resin is too small or the thermoplastic resin is dropped off the electroconductive fiber.

The average fiber length of the resin-attached fiber is not particularly limited but is preferably 10 um or more. The lower limit of the average fiber length is preferably 11 um or more, more preferably 12 um or more. The upper limit of the average fiber length is not limited but is preferably 100 um or less, more preferably 80 um or less, even more preferably 60 um or less, even more preferably 50 um or less, even more preferably 40 um or less, even more preferably 30 um or less.

The content of the thermoplastic resin in the resin-attached fiber according to the present invention is preferably 1 to 70% by mass with respect to the total amount of the electroconductive fiber and the thermoplastic resin. The lower limit of the content of the thermoplastic resin is more preferably 5% by mass or more, more preferably 10% by mass or more, even more preferably 15% by mass or more, even more preferably 20% by mass or more. The upper limit of the content of the thermoplastic resin is more preferably 65% by mass or less, even more preferably 60% by mass or less, even more preferably 55% by mass or less, even more preferably 50% by mass or less. If the content of the thermoplastic resin is less than 1% by mass, reinforcing effect of the thermoplastic resin is less likely to be exhibited. If the content of the thermoplastic resin exceeds 70% by mass, the amount of the thermoplastic resin adhering to the electroconductive fiber is too large, and therefore battery resistance is likely to increase.

The content of the electroconductive fiber in the resin-attached fiber according to the present invention is preferably 30 to 99% by mass with respect to the total amount of the electroconductive fiber and the thermoplastic resin. The lower limit of the content of the electroconductive fiber is more preferably 35% by mass or more, even more preferably 40% by mass or more, even more preferably 45% by mass or more, even more preferably 50% by mass or more, even more preferably 55% by mass or more. The upper limit of the content of the electroconductive fiber is more preferably 95% by mass or less, even more preferably 90% by mass or less, even more preferably 85% by mass or less, even more preferably 80% by mass or less.

(2) Electroconductive fiber

The electroconductive fiber used in the present invention is not particularly limited as long as it has electric conductivity, and examples of the material of the electroconductive fiber include carbon, nickel, copper, stainless steel, and aluminum. Among them, carbon and nickel are preferred, and carbon is particularly preferred. When the electroconductive fiber is made of carbon, examples of such electroconductive fiber include carbon fiber materials such as carbon nanotube (CNT), vapor-grown carbon fiber (VGCF (trademark)), PAN-based carbon fiber, and pitch-based carbon fiber. Among them, pitch-based carbon fiber is more preferred because it has high crystallinity and a small fiber diameter and is less likely to aggregate and excellent in dispersibility. Hereinbelow, the electroconductive fiber will be described with reference to a case in which it is carbon fiber.

The average fiber diameter of the carbon fiber used in the present invention is 10 to 5000 nm. The lower limit of the average fiber diameter is preferably 50 nm or more, more preferably 100 nm or more, even more preferably 150 nm or more, even more preferably 200 nm or more, even more preferably more than 200 nm, even more preferably 250 nm or more. The upper limit of the average fiber diameter is preferably 3000 nm or less, more preferably 2000 nm or less, even more preferably 1000 nm or less, even more preferably 900 nm or less, even more preferably 800 nm or less, even more preferably 700 nm or less, even more preferably 600 nm or less, even more preferably 500 nm or less, even more preferably 400 nm or less, even more preferably 350 nm or less. If the average fiber diameter is less than 10 nm, the fiber is likely to aggregate and therefore less likely to function as an electroconductive material. Further, if the average fiber diameter is less than 10 nm, the carbon fiber has a large specific surface area and therefore covers the surface of an active material in an active material layer. As a result, contact points between a solid electrolyte and the active material decrease, which leads to inhibition of formation of an ion conductive path. If the carbon fiber has an average fiber diameter exceeding 5000 nm, there is a case in which gaps are likely to be formed between fibers in an active material layer, which makes it difficult to increase the density of the active material layer.

The average aspect ratio of the carbon fiber used in the present invention is 30 or more, preferably 35 or more, preferably 40 or more. The upper limit of the average aspect ratio is not limited but is preferably 1000 or less, more preferably 500 or less, even more preferably 300 or less, even more preferably 200 or less, even more preferably 150 or less, even more preferably 100 or less. If the average aspect ratio is less than 30, there is a case in which, when an active material layer is produced, an electroconductive path is likely to be insufficiently formed by the carbon fiber in the active material layer, and therefore the resistance value in the thickness direction of the active material layer does not sufficiently reduce. Further, the mechanical strength of the active material layer is poor, and therefore cracking is likely to occur in the active material layer when stress is applied to the active material layer due to a change in the volume of an active material during charge/discharge.

The average fiber length of the carbon fiber is not particularly limited but is preferably 10 um or more. The lower limit of the average fiber length is preferably 11 um or more, more preferably 12 um or more. The upper limit of the average fiber length is not limited but is preferably 100 um or less, more preferably 80 um or less, even more preferably 60 um or less, even more preferably 50 um or less, even more preferably 40 um or less, even more preferably 30 um or less.

The carbon fiber used in the present invention preferably has a linear structure having substantially no branch. The "having substantially no branch" herein means that the degree of branching is 0.01 branches/$\mu$m or less. The branching refers to a particulate portion in which a carbon fiber is boded to another carbon fiber in a portion other than a terminal portion, and means that the principal axis of a carbon fiber branches in the middle and the principal axis of a carbon fiber has a branch-like secondary axis. As such branched carbon fiber, for example, vapor-grown carbon fiber (e.g., VGCF (trademark) manufactured by Showa Denko K.K.) is known which is produced by a vapor phase method in which a hydrocarbon such as benzene is vaporized in a high-temperature atmosphere in the presence of a metal such as iron as a catalyst. Carbon fiber substantially having a linear structure is superior in dispersibility to branched carbon fiber, and therefore a long-distance electroconductive path is likely to be formed.

The degree of branching of the carbon fiber used in the present invention herein means a value measured using a photographic image taken by a field-emission-type scanning electron microscope at 5,000-fold magnification.

It should be noted that the carbon fiber should have a fibrous form as a whole, and also includes, for example, carbon fiber obtained by contacting or bonding carbon fibers whose average aspect ratio is less than the above-described range to integrally have a fibrous form (e.g., carbon fiber in which spherical particles of carbon are connected like a string of beads or carbon fiber in which at least one or two or more very short fibers are connected by fusion).

The carbon fiber used in the present invention is not particularly limited in the distance (d002) between adjacent graphite sheets as measured by wide-angle X-ray measurement, but the distance (d002) is preferably 0.3365 nm or more, more preferably 0.3380 nm or more, even more preferably 0.3390 nm or more, even more preferably 0.3400 nm or more, even more preferably more than 0.3400 nm, even more preferably 0.3410 nm or more, even more preferably 0.3420 nm or more. Further, d002 is preferably 0.3450 nm or less, more preferably 0.3445 nm or less. Particularly, when d002 is 0.3400 nm or more, the carbon fiber is less likely to become brittle. Therefore, during disintegration or processing such as preparation of a kneaded slurry, the fiber is less likely to be damaged so that the fiber length thereof tends to be maintained. This makes it easy to form a long-distance electroconductive path. Further, the electroconductive path tends to follow a change in the volume of an active material due to charge/discharge of an all-solid-state lithium secondary battery and is therefore likely to be maintained.

The carbon fiber used in the present invention is not particularly limited in crystallite size (Lc002) as measured by wide-angle X-ray measurement, but the crystallite size (Lc002) is preferably 120 nm or less, more preferably 100 nm or less, even more preferably 80 nm or less, even more preferably 60 nm or less, even more preferably 50 nm or less, even more preferably 40 nm or less, even more preferably 30 nm or less, even more preferably 25 nm or less. When the crystallite size (Lc002) is larger, crystallinity is higher and electric conductivity is more excellent. However, when the crystallite size (Lc002) is small, the carbon fiber is less likely to become brittle. Therefore, during disintegration or processing such as preparation of a kneaded slurry, the fiber is less likely to be damaged so that the fiber length thereof is maintained. This makes it easy to form a long-distance electroconductive path. Further, the electroconductive path follows a change in the volume of an active material due to charge/discharge of an all-solid-state lithium secondary battery and is therefore likely to be maintained. The lower limit of the crystallite size (Lc002) is larger than 0, and is generally equal to or more than 5.0 nm that is a detection limit of a measuring device.

In the present invention, the crystallite size (Lc002) refers to a value measured by "Measurement of lattice parameters and crystallite sizes of carbon materials" in Japanese Industrial Standard JIS R 7651 (2007 version).

The carbon fiber used in the present invention preferably contains substantially no metallic element. Specifically, the content of metallic elements is preferably 50 ppm or less, more preferably 30 ppm or less, even more preferably 20 ppm or less in total. If the content of metallic elements exceeds 50 ppm, a battery is likely to deteriorate due to the catalytic action of metals. In the present invention, the content of metallic elements means a total content of Li, Na, Ti, Mn, Fe, Ni, and Co. Particularly, the content of Fe is preferably 5 ppm or less, more preferably 3 ppm or less, even more preferably 1 ppm or less. The Fe content exceeding 5 ppm is not preferred because a battery is particularly likely to deteriorate. It should be noted that the above-described vapor-grown carbon fiber (e.g., VGCF (trademark) manufactured by Showa Denko K.K.) contains a metal such as iron as a catalyst.

The content of each of hydrogen, nitrogen, and ash in the carbon fiber used in the present invention is preferably 0.5% by mass or less, more preferably 0.3% by mass or less. When the content of each of hydrogen, nitrogen, and ash in the carbon fiber is 0.5% by mass or less, structural defects in graphite layers are further prevented, which is preferred in that side reactions in a battery may be prevented.

Among carbon fiber materials to be used in the present invention, those other than carbon nanotube (CNT) and vapor-grown carbon fiber (VGCF (trademark)) are particularly excellent in dispersibility in an active material layer. The reason for this is not clear but is considered to be that they have such a structure as described above; they are made of a raw material such as natural graphite, artificial graphite produced by thermally processing petroleum- and coal-based coke, non-graphitizable carbon, or graphitizable carbon; and resin composite fiber is produced in the middle of a production process. It is considered that even when the active material layer contains no spherical particles, a long-distance electroconductive path may be formed due to excellent dispersibility, and therefore excellent battery performance is exhibited even when the content of the carbon fiber is low.

The carbon fiber used in the present invention may be porous or may have a hollow structure, but resin composite fiber obtained by melt blend spinning is preferably produced in the middle of the process of producing the carbon fiber. Therefore, it is preferred that the carbon fiber used in the present invention is substantially solid, basically has a smooth surface, and has such a linear structure having no branch as described above.

The carbon fiber used in the present invention may be produced by, for example, a method disclosed in WO2009/125857. An example of such a method will be described below.

First, a mesophase pitch composition is prepared which is obtained by dispersing mesophase pitch in a thermoplastic polymer. Then, the mesophase pitch composition is formed into a thread or film in a melted state. Particularly, spinning is preferably performed. By performing spinning, the mesophase pitch dispersed in the thermoplastic polymer is stretched in the thermoplastic polymer and the mesophase pitch composition is formed into resin composite fiber. This resin composite fiber has a sea-island structure in which the thermoplastic polymer is a sea component and the mesophase pitch is an island component.

Then, the obtained resin composite fiber is brought into contact with a gas containing oxygen to stabilize the mesophase pitch and obtain resin composite stabilized fiber. This resin composite stabilized fiber has a sea-island structure in which the thermoplastic polymer is a sea component and the stabilized mesophase pitch is an island component.

Then, the thermoplastic polymer as a sea component of the resin composite stabilized fiber is removed to obtain a carbon fiber precursor.

Further, this carbon fiber precursor is heated at high temperature to obtain ultrafine carbon fiber as carbon fiber.

(3) Thermoplastic resin

As the thermoplastic resin constituting the resin-attached fiber according to the present invention, any thermoplastic resin may be used as long as it is capable of forming an electrode and has sufficient electrochemical stability. As such a thermoplastic resin, at least one selected from the group consisting of polyvinyl alcohol, polyacrylic acid, carboxymethyl cellulose, polytetrafluoroethylene (PTFE), polyvinylidene fluoride (PVDF), a vinylidene fluoride-hexafluoropropylene copolymer (P-(VDF-HFP)), a tetrafluoroethylene-hexafluoropropylene copolymer (FEP), styrene butadiene rubber (SBR), a fluoroolefin copolymer, a polyimide, a polyamide-imide, an aramid, and a phenol resin is preferably used, and a thermoplastic resin containing a fluorine atom, such as polyvinylidene fluoride (PVDF) or a vinylidene fluoride-hexafluoropropylene copolymer (P-(VDF-HFP)), is particularly preferred.

The melting point of the thermoplastic resin is preferably 50 to 250°C. The lower limit of the melting point of the thermoplastic resin is more preferably 60°C or higher, even more preferably 70°C or higher, even more preferably 80°C or higher, even more preferably 90°C or higher, even more preferably 100°C or higher. The upper limit of the melting point of the thermoplastic resin is more preferably 220°C or lower, even more preferably 200°C or lower, even more preferably 180°C or lower, even more preferably 160°C or lower, even more preferably 150°C or lower.

If the melting point is lower than 50°C, particles of the thermoplastic resin are likely to aggregate in the process of dispersing the thermoplastic resin in an electrode. Further, the heat resistance of a battery reduces. If the melting point exceeds 250°C, there is a fear that an active material and a solid electrolyte deteriorate.

The glass transition point of the thermoplastic resin contained in the resin-attached fiber according to the present invention is not particularly limited but is preferably 250°C or lower. The upper limit of the glass transition point is preferably 200°C or lower, more preferably 150°C or lower, even more preferably 120°C or lower, even more preferably 100°C or lower, even more preferably 80°C or lower, even more preferably 50°C or lower, even more preferably 40°C or lower, even more preferably 30°C or lower, even more preferably 20°C or lower, even more preferably 10°C or lower, even more preferably 0°C or lower.

(4) Resin-attached fiber production method

The resin-attached fiber according to the present invention is not particularly limited as long as it is produced by a method in which the electroconductive fiber and the thermoplastic resin are directly integrated. Examples of such a method include: a method in which the thermoplastic resin is dissolved in a solvent, the electroconductive fiber is dispersed in the solution, and the solution is spray dried; a method in which the thermoplastic resin is dissolved in a solvent, the electroconductive fiber is dispersed in the solution, and then another solvent is added to deposit the thermoplastic resin in a state where the thermoplastic resin is attached to the electroconductive fiber; and a method in which the electroconductive fiber is wetted with a solution of monomer of the thermoplastic resin and then the monomer is polymerized.

An example of the spray drying method is as follows.

First, the thermoplastic resin used as a binding agent is dissolved in a solvent. The thermoplastic resin may completely be dissolved or part of the thermoplastic resin may be dissolved so that the rest is dispersed. The solvent is not particularly limited as long as it may dissolve the thermoplastic resin to be used. Preferred examples of such a solvent include alcohols such as ethanol and propanol, ketones such as acetone, ester-based low-boiling solvents, and water.

Then, the electroconductive fiber is dispersed in the solution in which the thermoplastic resin is dissolved. The amount of the thermoplastic resin to be dissolved (dispersed) and the amount of the electroconductive fiber to be dispersed should appropriately be determined in consideration of spray drying efficiency.

The thus obtained slurry is spray dried using a spray drier. As the spray drier, a nozzle type is more preferred than a disc type because liquid droplets need to have a small particle diameter to form a complex having a small particle diameter and excellent dispersibility. A nozzle diameter and a drying temperature may appropriately be determined in consideration of spray drying efficiency and the powder characteristics of resulting resin-attached fiber.

By spray drying the slurry, resin-attached fiber is obtained in which the electroconductive fiber and the thermoplastic resin are integrated by direct bonding.

An example of the method in which the thermoplastic resin is deposited in a state where the thermoplastic resin is attached to the electroconductive fiber (reprecipitation method) is as follows.

First, the thermoplastic resin used as a binding agent is dissolved in a solvent. The thermoplastic resin may completely be dissolved or part of the thermoplastic resin may be dissolved so that the rest is dispersed. The solvent is not particularly limited as long as it may dissolve the thermoplastic resin to be used. The solvent is preferably a low-boiling water-based solvent such as ethanol, propanol, or acetone.

Then, the electroconductive fiber is dispersed in the solution in which the thermoplastic resin is dissolved, and a solvent different from the above-described solvent is added to the dispersion liquid to deposit the dissolved thermoplastic resin. The solvent is not particularly limited as long as the solubility of the thermoplastic resin therein is low, and examples of such a solvent include toluene, xylene, and water.

Instead of the above-described method, a dispersion liquid obtained by dispersing the electroconductive fiber in a solvent such as toluene may be dropped into the solution in which the thermoplastic resin is dissolved.

By depositing the thermoplastic resin once dissolved in the presence of the electroconductive fiber, resin-attached fiber is obtained in which the electroconductive fiber and the thermoplastic resin are integrated by direct bonding. The resin-attached fiber deposited in the solvent is separated, washed, and dried by a known method.

An example of the method in which the electroconductive fiber is wetted with a solution of monomer of the thermoplastic resin and then the monomer is polymerized (polymerization method) is as follows.

First, a monomer of the thermoplastic resin (polymer) is dissolved in a solvent such as water. The solvent is not particularly limited as long as it may dissolve the monomer to be used. The solvent is preferably a low-boiling water-based solvent such as ethanol, propanol, or acetone.

Then, the solution in which the monomer is dissolved is sprayed onto the electroconductive fiber so that the monomer solution adheres to the electroconductive fiber.

Then, the monomer is changed to the thermoplastic resin (polymer) by polymerization performed by a method in which the electroconductive fiber to which the monomer solution adheres is heated or irradiated with light. At this time, a known polymerization initiator may be added.

By polymerizing the monomer in a state where droplets of the monomer solution adhere to the electroconductive fiber, resin-attached fiber is obtained in which the electroconductive fiber and the thermoplastic resin (polymer) are integrated by direct bonding.

(5) Active material layer

The resin-attached fiber according to the present invention may be used for an active material layer of a non-aqueous electrolyte secondary battery such as a lithium ion secondary battery or an all-solid-state secondary battery. In a non-aqueous electrolyte secondary battery configured to include an electrode having an active material layer, the resin-attached fiber functions as an electroconductive auxiliary agent by making use of its electric conductivity. Further, the thermoplastic resin in the resin-attached fiber maintains contact points between particles of an active material, which contributes to the performance of the non-aqueous electrolyte secondary battery.

An active material layer according to the present invention may be either a positive electrode active material layer or a negative electrode active material layer. This active material layer is configured to include at least an active material and the resin-attached fiber according to the present invention, and may include a solid electrolyte.

The active material layer has voids. The void ratio of the active material layer is preferably 5.0% by volume or more and 50% by volume or less. When the void ratio is within such a range, the occurrence of cracking in the active material layer is particularly prevented even when charge and discharge cycles involving a change in the volume of the active material are repeated. By using such an active material layer having voids, it is possible to form a high-output all-solid-state lithium secondary battery having high electron conductivity and ion conductivity. The lower limit of the void ratio is more preferably 7.0% by volume or more, even more preferably 9.0% by volume or more, even more preferably 10% by volume or more, even more preferably 11% by volume or more, even more preferably 12% by volume or more, even more preferably 15% by volume or more, particularly preferably 18% by volume or more. The upper limit of the void ratio is more preferably 48% by volume or less, even more preferably 45% by volume or less, even more preferably 42% by volume or less, even more preferably 37% by volume or less, even more preferably 35% by volume or less, particularly preferably 30% by volume or less.

The void ratio of the active material layer may be adjusted by controlling the average fiber diameter and average fiber length of the resin-attached fiber according to the present invention, the material, size, and content of a positive or negative active material to be used, and molding conditions of press molding optionally performed when the active material layer is formed.

A method for calculating the void ratio is not particularly limited, and examples of the method include a method in which the void ratio is calculated from the true density and density of the active material layer on the basis of the following expression (3) and a method in which the void ratio is calculated from a three-dimensional image obtained by tomography such as X-ray CT.

$$\text{Void ratio (\% by volume)} = (\text{true density} - \text{density of active material layer}) / \text{true density} \times 100 \quad \cdots \text{Expression (3)}$$

When the void ratio is calculated on the basis of the expression (3), each of the true density and the apparent density of the active material layer is measured. Examples of a method for measuring the true density include a method in which the true density is calculated from the true density and mass ratio of each of materials constituting the active material layer and a method in which the true density is measured using a gas phase substitution method (pycnometer method) or a liquid phase method (Archimedes method) after pulverization of the active material layer. The apparent density of the active material layer may be calculated by, for example, the following expression (4) from the mass and volume of the active material layer.

$$\text{Apparent density of active material layer} = \text{mass of active material layer} / (\text{thickness of active material layer} \times \text{area}) \quad \cdots \text{Expression (4)}$$

The electric conductivity in the thickness direction of the active material layer is preferably $1.0 \times 10^{-3}$ S/cm or more, more preferably $5.0 \times 10^{-3}$ S/cm or more, even more preferably $1.0 \times 10^{-2}$ S/cm or more, particularly preferably $1.6 \times 10^{-2}$ S/cm or more. Such electric conductivity may be achieved by adding the resin-attached fiber according to the present invention as an electroconductive auxiliary agent.

(5-1) Positive electrode active material layer

A positive electrode active material layer according to the present invention contains at least a positive electrode active material and the resin-attached fiber according to the present invention, and may further contain a solid electrolyte, a binding agent, and others.

As the positive electrode active material, a conventionally-known material may be used. For example, a lithium-containing metal oxide capable of storing and releasing lithium ions is preferred. Examples of such a lithium-containing metal oxide include composite oxides containing lithium and at least one element selected from the group consisting of Co, Mg, Mn, Ni, Fe, Al, Mo, V, W, and Ti.

Specifically, the lithium-containing metal oxide may be at least one selected from the group consisting of $Li_xCoO_2$, $Li_xNiO_2$, $Li_xMnO_2$, $Li_xCo_aNi_{1-a}O_2$, $Li_xCo_bV_{1-b}O_z$, $Li_xCo_bFe_{1-b}O_2$, $Li_xMn_2O_4$, $Li_xMn_cCo_{2-c}O_4$, $Li_xMn_cNi_{2-c}O_4$, $Li_xMn_cV_{2-c}O_4$, $Li_xMn_cFe_{2-c}O_4$, $Li_xNi_aMn_dCo_{1-a-d}O_2$, and $Li_xNi_aCo_dAl_{1-a-d}O_2$ (wherein x = 0.02 to 1.2, a = 0.1 to 0.9, b = 0.8 to 0.98, c = 1.2 to 1.96, d = 0.1 to 0.9, z = 2.01 to 2.3). The lithium-containing metal oxide is preferably at least one selected from the group consisting of $Li_xCoO_2$, $Li_xNiO_2$, $Li_xMnO_2$, $Li_xCo_aNi_{1-a}O_2$, $Li_xMn_2O_4$, $Li_xMn_cCo_{2-c}O_4$, $Li_xMn_cNi_{2-c}O_4$, $Li_xCo_bV_{1-b}O_z$, $Li_xNi_aMn_dCo_{1-a-d}O_2$, and $Li_xNi_aCo_dAl_{1-a-d}O_2$ (wherein x, a, b, c, d, and z are the same as described above). These positive electrode active materials may be used singly or in combination of two or more of them. It should be noted that the value of x is a value before the start of charge/discharge and varies due to charge/discharge.

The surface of the positive electrode active material may be covered with a coating layer. The coating layer may prevent a reaction between the positive electrode active material and the solid electrolyte (especially, a sulfide solid electrolyte). Examples of the coating layer include Li-containing oxides such as $LiNbO_3$, $Li_3PO_4$, and LiPON. The average thickness of the coating layers is, for example, 1 nm or more. On the other hand, the average thickness of the coating layers is, for example, 20 nm or less and may be 10 nm or less.

The average particle diameter of the positive electrode active material is preferably 20 um or less, more preferably 0.05 to 15 $\mu$m, even more preferably 1 to 12 um. If the average particle diameter exceeds 20 $\mu$m, there is a case in which the efficiency of a charge and discharge reaction at a great current reduces.

The content of the positive electrode active material in the positive electrode active material layer is not particularly limited, but is preferably 30 to 99% by mass, more preferably 40 to 95% by mass, even more preferably 50 to 90% by mass. If the content of the positive electrode active material is less than 30% by mass, there is a case in which it is difficult to use the positive electrode active material layer for power sources required to have a high energy density. If the content of the positive electrode active material exceeds 99% by mass, there is a case in which the content of materials other than the positive electrode active material is low so that the performance of the positive electrode active material layer degrades.

The content of the solid electrolyte in the positive electrode active material layer is not particularly limited, but is preferably 5 to 60% by mass, more preferably 10 to 50% by mass, even more preferably 20 to 40% by mass. If the content of the solid electrolyte is less than 5% by mass, there is a case in which the ion conductivity of the positive electrode active material layer is poor. If the content of the solid electrolyte exceeds 60% by mass, there is a case in which the content of the positive electrode active material is low, and therefore it is difficult to use the positive electrode active material layer for power sources required to have a high energy density.

The positive electrode active material layer may contain a binding agent in a small amount without inhibiting electron conductivity and ion conductivity.

The thickness of the positive electrode active material layer is usually 10 to 1000 $\mu$m.

(5-2) Negative electrode active material layer

A negative electrode active material layer according to the present invention constituting an all-solid-state lithium secondary battery contains at least a negative electrode active material, and may contain a solid electrolyte, the resin-attached fiber according to the present invention, a binding agent, and others.

As the negative electrode active material to be used, a conventionally-known material may be selected. For example, any one of Li metal, a carbon material, lithium titanate ($Li_4Ti_5O_{12}$), Si, Sn, In, Ag, and Al or an alloy or oxide containing at least one of them may be used. Among them, Li metal is preferred from the viewpoint of increasing energy density.

As the negative electrode active material other than Li metal, a carbon material is widely used. Examples of the carbon material include natural graphite, artificial graphite produced by thermally treating petroleum- or coal-based coke, hard carbon obtained by carbonizing a resin, and a mesophase pitch-based carbon material.

As the carbon material selected as the negative electrode active material of an all-solid-state battery, hard carbon is preferred in that the interlayer spacing of a crystal is wide and swelling/shrinkage during charge/discharge is not relatively large. Hard carbon has a structure in which fine crystalline graphene layers are irregularly arranged, and stores lithium ions by insertion of lithium ions into the graphene layers and lithium aggregation (lithium metallization) in spaces formed between the graphene layers.

When natural graphite or artificial graphite is used, from the viewpoint of increasing battery capacity, the interplanar spacing d(002) between (002) planes of a graphite structure as measured by powder X-ray diffraction is preferably 0.335 to 0.337 nm. Natural graphite refers to a graphitic material naturally produced as ores. Natural graphite is divided into two types according to its appearance and properties: one is vein graphite having high crystallinity; the other is amorphous graphite having low crystallinity. Vein graphite is subdivided into flake graphite having a leaf-like appearance and lump vein graphite. Natural graphite as a graphitic material is not particularly limited in its production area, properties, and type. Further, natural graphite or particles produced using natural graphite as a raw material may be thermally treated before use.

Artificial graphite refers to graphite produced by a wide range of artificial methods and a graphitic material close to a perfect crystal of graphite. A typical example of such artificial graphite is one produced through a firing process at about 500 to 1000°C and a graphitization process at 2000°C or higher using, as a raw material, tar or coke obtained from residues from coal carbonization or crude oil distillation. In addition, kish graphite obtained by redeposition of carbon from molten iron is also a type of artificial graphite.

The use of an alloy containing at least one of Si and Sn in addition to the carbon material as the negative electrode active material is effective in that electric capacity may be reduced as compared to when each of Si and Sn is used as a single substance or an oxide of each of Si and Sn is used. Among them, an Si-based alloy is preferred.

The Si-based alloy may be an alloy of Si and at least one element selected from the group consisting of B, Mg, Ca, Ti, Fe, Co, Mo, Cr, V, W, Ni, Mn, Zn, and Cu. Specifically, the Si-based alloy may be at least one selected from the group consisting of $SiB_4$, $SiB_6$, $Mg_2Si$, $Ni_2Si$, $TiSi_2$, $MoSi_2$, $CoSi_2$, $NiSi_2$, $CaSi_2$, $CrSi_2$, $Cu_5Si$, $FeSi_2$, $MnSi_2$, $VSi_2$, $WSi_2$, and $ZnSi_2$.

In the active material layer for all-solid-state lithium secondary batteries according to the present invention, as the negative electrode active material, the already-described materials may be used singly or in combination of two or more of them.

The content of the negative electrode active material in the negative electrode active material layer is not particularly limited, but is preferably 30 to 100% by mass, more preferably 40 to 99% by mass, even more preferably 50 to 95% by mass. If the content of the negative electrode active material is less than 30% by mass, there is a case in which it is difficult to use the negative electrode active material layer for power sources required to have a high energy density.

The content of the solid electrolyte in the negative electrode active material layer is not particularly limited, but is preferably 0 to 60% by mass, more preferably 5 to 50% by mass, even more preferably 10 to 40% by mass. If the content of the solid electrolyte exceeds 60% by mass, there is a case in which the content of the positive electrode active material is low, and therefore it is difficult to use the negative electrode active material layer for power sources required to have a high energy density.

The negative electrode active material layer may contain a binding agent in a small amount without inhibiting electron conductivity and ion conductivity.

The thickness of the negative electrode active material layer is usually 1 to 1000 $\mu$m.

(5-3) Solid electrolyte

As a solid electrolyte used in the present invention, a conventionally-known material may be selected. Examples of the solid electrolyte include a sulfide-based solid electrolyte, an oxide-based solid electrolyte, a hydride-based solid electrolyte, and a polymer electrolyte. In the present invention, a sulfide-based solid electrolyte is preferably used for its high lithium ion conductivity.

A specific example of the sulfide-based solid electrolyte is a sulfide-based solid electrolyte (Li-A-S) made of Li, A, and S. A in the sulfide-based solid electrolyte, Li-A-S is at least one selected from the group consisting of P, Ge, B, Si, Sb, and I. Specific examples of such a sulfide-based solid electrolyte, Li-A-S include $Li_7P_3S_{11}$, $70Li_2S$-$30P_2S_5$, $LiGe_{0.25}P_{0.75}S_4$, $75Li_2S$-$25P_2S_5$, $80Li_2S$-$20P_2S_5$, $Li_{10}GeP_2S_{12}$, $Li_{9.54}Si_{1.74}P_{1.44}S_{11.7}Cl_{0.3}$, $Li_2S$-$SiS_2$, and $Li_6PS_5Cl$. Particularly, $Li_7P_3S_{11}$ is preferred for its high ion conductivity.

A specific example of the hydride-based solid electrolyte is a complex hydride of lithium boron hydride. Examples of the complex hydride include $LiBH_4$-$LiI$-based complex hydrides, $LiBH_4$-$LiNH_2$-based complex hydrides, $LiBH_4$-$P_2S_5$, and $LiBH_4$-$P_2I_4$.

These solid electrolytes may be used singly or may be used in combination of two or more of them if necessary.

(5-4) Electroconductive auxiliary agent

An electroconductive auxiliary agent contained in the active material layer according to the present invention contains the resin-attached fiber according to the present invention. In addition to the resin-attached fiber, a carbon-based electroconductive auxiliary agent may be contained.

The content of the resin-attached fiber in the active material layer is 0.1% by mass or more and less than 5% by mass. The lower limit of the content of the resin-attached fiber is preferably 0.5% by mass or more, more preferably 1.0% by mass or more, even more preferably 1.2% by mass or more, particularly preferably 1.5% by mass or more. The upper limit of the content of the resin-attached fiber is preferably 4.5% by mass or less, more preferably 4.0% by mass or less, even more preferably 3.5% by mass or less, even more preferably 3.0% by mass or less, particularly preferably 2.5% by mass or less. When the content of the resin-attached fiber is within the above range, balance between electron conductivity and lithium ion conductivity is excellent, a rate characteristic value is high, and a reaction resistance value may be reduced. Further, the amount of the resin-attached fiber in the active material layer is small, and therefore the amount of the active material may be increased.

(5-5) Binding agent (Binder)

The active material layer according to the present invention may contain a binding agent in order to further enhance the strength of the active material layer. The binding agent is not limited, and may be the thermoplastic resin constituting the resin-attached fiber according to the present invention.

The content of the binding agent in the active material layer is preferably 5% by mass or less, more preferably in the range of 1 to 3% by mass.

(5-6) Method for producing active material layer for all-solid-state lithium secondary batteries

The active material layer according to the present invention may be produced, for example, in the following manner. A slurry is prepared by mixing the above-described active material, solid electrolyte, resin-attached fiber, and a solvent. The slurry is allowed to adhere to a current collector by, for example, coating, the solvent is then removed by drying, and press molding is optionally performed by a press. Alternatively, the active material layer may be produced by mixing powders of the above-described active material, solid electrolyte, and resin-attached fiber and then subjecting the mixture to press molding using a press.

(6) Electrode

An electrode for non-aqueous electrolyte secondary batteries according to the present invention contains the above-described active material layer.

A current collector used for the electrode according to the present invention may be formed of any electroconductive material. For example, the current collector may be formed of a metallic material such as aluminum, nickel, iron, stainless steel, titanium, or copper. Particularly, the current collector is preferably formed of aluminum, stainless steel, or copper. For a positive electrode, aluminum or carbon-coated aluminum is more preferably used, and for a negative electrode, copper is more preferably used.

A suitable thickness of the current collector is 10 to 50 $\mu$m.

(7) Non-aqueous electrolyte secondary battery

A non-aqueous electrolyte secondary battery according to the present invention will be described. The non-aqueous electrolyte secondary battery according to the present invention is a battery including the above-described electrode for non-aqueous electrolyte secondary batteries.

Examples of the non-aqueous electrolyte secondary battery according to the present invention include a lithium ion secondary battery, a lithium battery, a lithium ion polymer battery, and an all-solid-state lithium secondary battery. Among them, an all-solid-state lithium secondary battery that will be described later is preferred in consideration of the effects of the present invention.

(8) All-solid-state lithium secondary battery

The all-solid-state lithium secondary battery includes the above-described positive electrode active material layer, a solid electrolyte layer formed of a solid electrolyte, and the above-described negative electrode active material layer, wherein the positive electrode active material layer and the negative electrode active material layer are disposed in such a manner that the solid electrolyte layer is interposed between them. In usual, a positive electrode current collector is provided on the positive electrode active material layer and a negative electrode current collector is provided on the negative electrode active material layer so that the positive electrode active material layer, the solid electrolyte layer, and the negative electrode active material layer are sandwiched between the positive electrode current collector and the negative electrode current collector, and further a battery case is disposed so as to entirely cover them.

Particularly, according to the present invention, the resin-attached fiber is three-dimensionally and randomly oriented in the active material layers, and therefore an ion conductive path and an electron conductive path are maintained even when the volume of the active material changes due to swelling/shrinkage during charge/discharge. Therefore, both of ion conductivity and electron conductivity may be achieved. This makes it possible to provide a high-output all-solid-state lithium secondary battery excellent in rate characteristics and cycle characteristics.

The all-solid-state lithium secondary battery according to the present invention is not particularly limited as long as it has at least an active material layer and a solid electrolyte layer, and usually has a positive electrode current collector, a negative electrode current collector, a battery case, and others as described above.

In the all-solid-state lithium secondary battery, the active material layer and the solid electrolyte layer do not need to have a clear interface. When the interface between the active material layer and the solid electrolyte layer is not clear, a layer of 10 um or less in the thickness direction in which the active material is present at 10% by volume or more may be regarded as the active material layer.

**Examples**

Hereinbelow, the present invention will more specifically be described with reference to examples, but the present invention is not limited to these examples. Various measurements and analyses in Examples were performed by the following methods respectively.

(Determination of shape of fibrous carbon)

The fiber length of fibrous carbon was measured by a particle image analyzer (manufactured by JASCO INTERNATIONAL CO., LTD., type: IF-200nano) using a dilute dispersion liquid in which fibrous carbon (sample) was dispersed in 1-methyl-2-pyrrolidone. The average fiber length of the fibrous carbon is a number-based average.

The fiber diameter of the fibrous carbon was determined in the following manner. The fibrous carbon was observed and photographed using a scanning electron microscope (S-2400 manufactured by Hitachi, Ltd.), fiber diameters were measured at 300 points randomly selected in an obtained electron micrograph, and the average value of all the measurement results (n = 300) was determined as an average fiber diameter.

Further, a CV value was determined from the average value and a standard deviation. Further, an average aspect ratio was calculated from the average fiber length and the average fiber diameter.

(X-ray diffraction measurement of carbon fiber)

X-ray diffraction measurement was performed in accordance with JIS R7651 using RINT-2100 manufactured by Rigaku Corporation to measure a lattice spacing (d002) and a crystallite size (Lc002).

(Compositional ratio)

The content ratio of electroconductive fiber/thermoplastic rein was calculated from the rate of weight loss in thermogravimetric analysis (TGA).

(Powder volume resistivity measurement method)

Powder volume resistivity was measured by a powder resistivity measurement system (MCP-PD51) manufactured by Mitsubishi Chemical Analytech Co., Ltd. using a four probe-type electrode unit under a load of 0.02 to 2.50 kN. The values of volume resistivity at packing densities of 0.5 $g/cm^3$, 0.8 $g/cm^3$, and 1.0 $g/cm^3$ were determined from a relationship diagram of volume resistivity with change in packing density as powder volume resistivity values of a sample.

(Melting point of thermoplastic resin)

A melting point and a glass transition temperature were measured by differential scanning calorimetry (DSC) in accordance with a measurement method in ISO 3146 (Testing methods for transition temperatures of plastics, JIS K7121).

(Tensile rupture strength)

In a low-humidity environment at a dew-point temperature of -60°C or lower, 40 parts by mass of LPS, 50 parts by mass of a positive electrode active material ($LiNi_{1/3}C_{1/3}Mn_{1/3}O_2$), and 10 parts by mass of a resin-attached fiber assembly were mixed in an agate mortar. The mixture was packed in a press molding jig and subjected to hot press molding (150°C, 100 MPa), and the resultant was cut to have a width of 5 mm and a length of 7 mm to prepare a specimen for evaluating adhesiveness. A tensile test was performed using the prepared specimen. The results are shown in Table 1. It is clear that the use of the resin-attached fiber assembly improves tensile rupture strength.

(Dispersibility)

One part by mass of a resin-attached fiber was dispersed in 500 parts by mass of toluene to visually evaluate a dispersion state.

○: The resin-attached fiber may be dispersed by shaking the dispersion liquid.
□: The resin-attached fiber cannot be dispersed simply by shaking the dispersion liquid, but may be dispersed by ultrasonication.
×: The resin-attached fiber may be dispersed neither by shaking the dispersion liquid nor by ultrasonication.

(Tap density measurement)

A resin-attached fiber was placed in a glass measuring cylinder having an inner diameter of 31 mm and a capacity of 150 mL, and the cylinder was tapped by a tap density measuring machine (manufactured by TSUTSUI SCIENTIFIC INSTRUMENTS Co., Ltd., TPM-1A) under conditions of a tap speed of 40 times/min, a tap stroke range of 60 mm, and a tap count of 500 times to measure a tap density.

(Mesophase pitch production method)

Coal tar pitch having a softening point of 80°C, from which quinoline insolubles had previously been removed, was hydrogenated at a pressure of 13 MPa and a temperature of 340°C in the presence of a Ni-Mo-based catalyst to obtain hydrogenated coal tar pitch. This hydrogenated coal tar pitch was thermally treated under ordinary pressure at 480°C, and then low-boiling components were removed by depressurization to obtain mesophase pitch. This mesophase pitch was filtered using a filter at a temperature of 340°C to remove foreign matter in the pitch and obtain refined mesophase pitch.

(Carbon fiber (CNF) production method (i))

First, 60 parts by mass of linear low-density polyethylene (EXCEED (trademark) 1018HA, manufactured by ExxonMobil, MFR = 1 g/10 min) as a thermoplastic resin and 40 parts by mass of the mesophase pitch (mesophase ratio: 90.9%, softening point: 303.5°C) obtained above in (Mesophase pitch production method) were melt-kneaded by a co-rotation twin screw extruder ("TEM-26SS" manufactured by Toshiba Machine Co., Ltd., barrel temperature: 300°C, in nitrogen stream) to prepare a mesophase pitch composition.

Then, this mesophase pitch composition was subjected to melt spinning at a spinneret temperature of 360°C and formed into a long staple fiber having a fiber diameter of 90 um.

A mesophase pitch-containing fiber bundle obtained by the above operation was used in an amount of 0.1 kg and maintained in air at 215°C for 3 hours to stabilize the mesophase pitch and obtain a stabilized mesophase pitch-containing fiber bundle. The stabilized mesophase pitch-containing fiber bundle was decompressed to 1 kPa after nitrogen purge in a gas convertible high vacuum furnace and, under such a decompressed state, heated to 500°C at a temperature rise rate of 5°C/min and maintained at 500°C for 1 hour to remove the thermoplastic resin and obtain stabilized fiber.

Then this stabilized fiber was carbonized by being maintained in a nitrogen atmosphere at 1000°C for 30 minutes and was further graphitized by being heated to 1500°C and maintained at 1500°C for 30 minutes in an argon atmosphere.

Then, this graphitized carbon fiber assembly was pulverized to obtain a powdery carbon fiber assembly. The carbon fiber had a linear structure without branches.

In the SEM photograph of the obtained carbon fiber, branches could not be observed in the carbon fiber (degree of branching was less than 0.01 branches/$\mu$m). The crystallite interplanar spacing d002 was 0.3441 nm, the crystallite size Lc002 was 5.4 nm, the average fiber diameter was 270 nm, the average fiber length was 15 $\mu$m, the average aspect ratio was 56, the powder volume resistivity at 0.5 g/cm$^3$ was 0.0677 $\Omega$·cm, the powder volume resistivity at 0.8 g/cm$^3$ was 0.0277 $\Omega$·cm, a compression recovery degree was 59%, and a specific surface area was 10 m$^2$/g. A metal content was less than 20 ppm.

The obtained carbon fiber was excellent fibrous carbon whose d002 was large but average aspect ratio was large, average fiber length was long, and electric conductivity was high. Hereinafter, this fibrous carbon was sometimes abbreviated as "CNF(i)".

(Carbon fiber (CNF(ii)) production method)

Carbon fiber was obtained in the same manner as in the above-described fibrous carbon (CNF(i)) production method except that the graphitization temperature was changed to 1700°C.

In the SEM photograph of the obtained carbon fiber, branches could not be observed in the carbon fiber (degree of branching was less than 0.01 branches/gm). The crystallite interplanar spacing d002 was 0.3432 nm, the crystallite size Lc002 was 10.1 nm, the average fiber diameter was 299 nm, the average fiber length was 14 um, the average aspect ratio was 47, the powder volume resistivity at 0.5 g/cm$^3$ was 0.0602 $\Omega$·cm, the powder volume resistivity at 0.8 g/cm$^3$ was 0.0205 $\Omega$·cm, a compression recovery degree was 73%, and a specific surface area was 9 m$^2$/g. A metal content was less than 20 ppm.

The obtained carbon fiber was excellent fibrous carbon whose d002 was large but average aspect ratio was large, average fiber length was long, and electric conductivity was high. Hereinafter, this fibrous carbon was sometimes abbreviated as "CNF(ii)".

(Resin-attached fiber production method)

(Examples 1 and 3 to 6, Comparative Example 2) (Spray drying (SD) method)

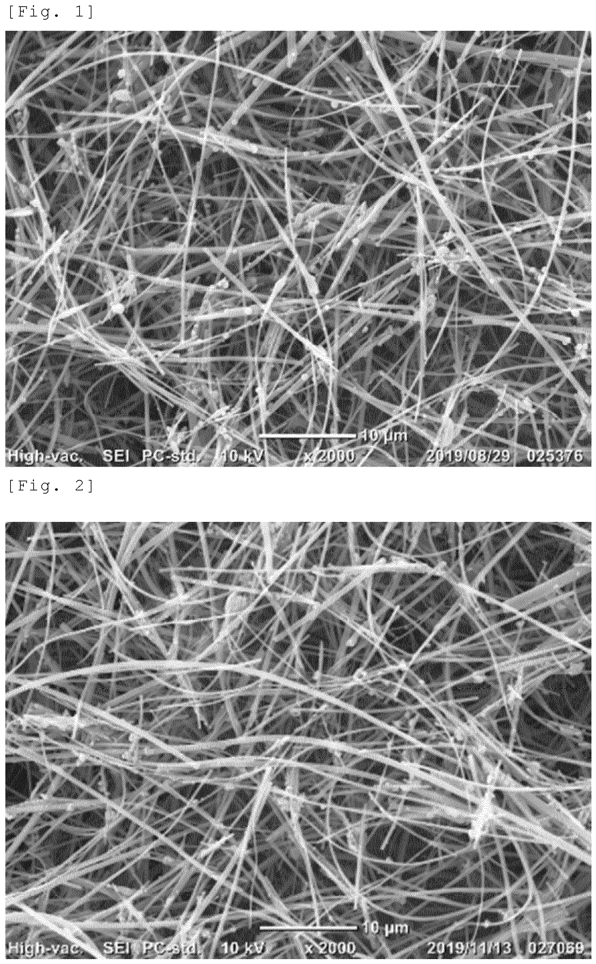

A VDF-HFP copolymer (Kynar2500-20 manufactured by Arkema) was dissolved in acetone, and electroconductive fiber was dispersed therein to prepare a dispersion liquid. The dispersion liquid was spray dried using a spray drier (SB39 manufactured by PRECI Co., Ltd.) to obtain resin-attached fiber. The evaluation results of the resin-attached fiber are shown in Table 1. It should be noted that the SEM photograph of Example 4 is shown in Fig. 1 and the SEM photograph of Example 5 is shown in Fig. 2.

(Example 2) (Reprecipitation method)

One part by mass of a VDF-HFP copolymer (Kynar2500-20 manufactured by Arkema) was dissolved in acetone to prepare a resin solution. Then, 3 parts by mass of electroconductive fiber was dispersed in toluene, and the resin solution was dropped into the dispersion liquid with stirring to deposit the resin. It should be noted that the amounts of the liquids were adjusted so that the mass ratio between acetone and toluene was 1 : 2. After the completion of dropping, stirring was continued for 60 min to sufficiently deposit the resin and then stopped, and the resultant was filtered and dried to obtain resin-attached fiber. The evaluation results of the resin-attached fiber are shown in Table 1.

(Comparative Example 3) (Simple mixing)

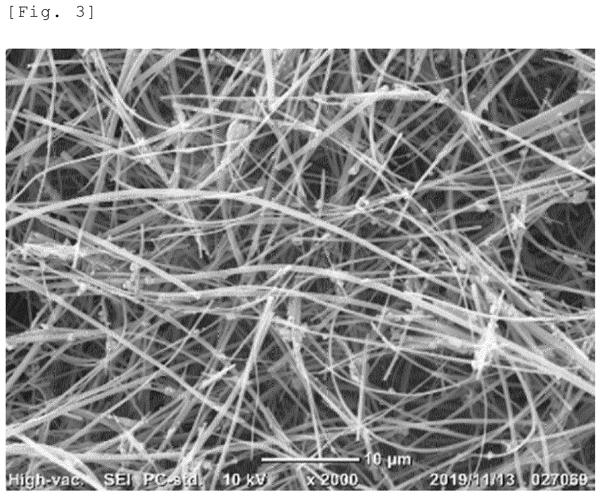

A VDF-HFP copolymer (Kynar2500-20 manufactured by Arkema) and CNF(i) were dispersed in toluene, and the dispersion liquid was filtered and dried to prepare a mixture in which the copolymer and CNF(i) were simply mixed. The SEM photograph of the mixture obtained by simple mixing is shown in Fig. 3.

The comprehensive evaluations of Examples 1 to 6, CNF(i) (Comparative Example 1), and Comparative Examples 2 and 3 are shown in Table 1.

⊙: The tensile rupture strength is high (more than 3.0 MPa) and the powder volume resistivity at 1.0 g/cc is low (less than 0.1 $\Omega \cdot$cm).
○: The tensile rupture strength is high (more than 3.0 MPa) and the powder volume resistivity at 1.0 g/cc is slightly low (0.1 $\Omega \cdot$cm or more and less than 1 $\Omega \cdot$cm).
△: The tensile rupture strength is slightly high (more than 0.1 MPa and 3.0 MPa or less) and the powder volume resistivity at 1.0 g/cc is low (less than 1.0 $\Omega \cdot$cm).
×: The tensile rupture strength is low (0.1 MPa or less) or the powder volume resistivity at 1.0 g/cc is high (1.0 $\Omega \cdot$cm or more) or the dispersibility is evaluated as ×.

The integration of the electroconductive fiber and the thermoplastic resin in the obtained resin-attached fiber was confirmed by the following method. Specifically, the resin-attached fiber obtained in each of Examples was dispersed in toluene by ultrasonication, the dispersion liquid was well shaken and then left to stand for 5 minutes, and the height of precipitated solid matter was measured. As a result, the height of precipitated solid matter of the resin-attached fiber obtained in each of Examples was about 40 mm.
On the other hand, when only the electroconductive fiber was dispersed at the same concentration, the height of precipitated solid matter was about 53 mm, and when the electroconductive fiber and the thermoplastic resin were mixed at the same concentrations respectively without forming a composite, the height of precipitated solid matter was about 52 mm. From this, it was confirmed that in the resin-attached fiber obtained in each of Examples, the electroconductive fiber and the thermoplastic resin were integrated.
It is clear that as compared to when CNF(i) and the thermoplastic resin are simply mixed (Comparative Example 3, Fig. 3), the resin-attached fiber obtained in Example 4 (Fig.1) is comparable in dispersibility to Comparative Example 3, in which the thermoplastic resin simply adheres to the surface of the electroconductive fiber, but has lower powder volume resistivity and higher electric conductivity. Further, it is estimated that the carbon fiber is integrated with the thermoplastic resin because the tensile rupture strength is high and the adhesiveness is excellent.

(Battery evaluation)

(Solid electrolyte (LPS) production method)

$Li_2S$ and $P_2S_5$ were mixed in a mole ratio of 75:25 and treated by a ball mill (a cycle including rotation at 500 rpm for 12 min and interruption for 8 min was repeated 100 times) to prepare a sulfide-based solid electrolyte (LPS).

Hereinafter, this sulfide-based solid electrolyte is sometimes abbreviated as "LPS".

(Example 9) (Positive electrode mixture production method)

In an argon atmosphere, 35.8 parts by mass of LPS, 61.6 parts by mass of a positive electrode active material, and 2 parts by mass of resin-attached fiber (the resin-attached fiber produced in Example 4) were mixed in an agate mortar. As the positive electrode active material, $LiNi_{1/3}Co_{1/3}Mn_{1/3}O_2$ coated with $LiNbO_3$ (average particle diameter: 10.18 um, $D_{50}$: 10.26 um, powder electric conductivity: $5.46 \times 10^{-7}$ @ 2.47 g/cm$^3$, hereinafter abbreviated as "surface-coated NCM") was used.

(Production method of cell for all-solid-state battery evaluation)

In a cell container for all-solid-state battery evaluation, 10 parts by mass of LPS was packed and pressed at 100 MPa three times to form a solid electrolyte layer. One part by mass of the positive electrode mixture was added and pressed at 150°C and 100 MPa for 10 minutes to form a positive electrode active material layer on one of the surfaces of the solid electrolyte layer. On the other surface of the solid electrolyte layer, a Li foil (thickness: 47 um) and an In foil (thickness: 50 um) were set as a negative electrode active material and pressed at 80 MPa. Finally, the cell was fixed with bolts to prepare a cell for all-solid-state battery evaluation which was kept pressurized at 2N.

(Rate characteristics evaluation)

The thus prepared cell was used to measure discharge rate characteristics. A charge and discharge test was constantly performed at 70°C. The measurement conditions of discharge rate characteristics are as follows. As for charge conditions, 0.05C constant-current charge was performed up to 3.7 V and then switched to discharge. As for discharge conditions, a lower limit voltage was set to 2.0 V, and constant-current discharge was performed at each discharge rate. The discharge rate was increased stepwise as follows: 0.1C → 0.2C→0.5C→1C. The discharge capacity (mAh/g) per unit weight of the active material at each discharge rate is shown in a table. A higher-output all-solid-state lithium secondary battery has a larger discharge capacity.

(Cycle characteristics)

The cell after the rate characteristics evaluation was used to evaluate cycle characteristics by repeating charge and discharge. A charge and discharge test for evaluating cycle characteristics was constantly performed at 70°C. As for charge conditions, 0.1C constant-current charge up to 3.7 V and CV constant-voltage charge (cutoff: 0.05C) were performed and then switched to discharge. As for discharge conditions, a lower limit voltage was set to 2.0 V, and 0.1C constant-current discharge was performed. A discharge capacity retention rate after 30 cycles was evaluated.

(Examples 10 and 11 and Comparative Examples 4 and 5)

An active material layer and a cell for all-solid-state battery evaluation were prepared in the same manner as in Example 9 except that the resin-attached fiber was changed as shown in Table 2. The evaluation results of the rate characteristics and the cycle characteristics of the cells are shown in Tables 2 and 3.
It should be noted that as spherical particles, acetylene black (hereinafter, sometimes abbreviated as "AB", "DENKA BLACK" (trademark) manufactured by Denka Company Limited, 75% pressed product, average particle diameter: 0.036 um, specific surface area: 65 m$^2$/g) was used.

(Example 12) (Positive electrode mixture layer production method)

In an argon atmosphere, 24 parts by mass of LPS, 70 parts by mass of the positive electrode active material, and a binder solution obtained by dissolving 2 parts by mass of an acrylic binder (a polystyrene-butyl acrylate copolymer) in 10 parts by mass of butyl butyrate were stirred by a mixer "AWATORIRENTARO" (manufactured by THINKY CORPORATION). Then, 4 parts by mass of the resin-attached fiber (Example 4) and 15 parts by mass of butyl butyrate were added and the resultant was again stirred to prepare a slurry for positive electrode mixture.
The obtained slurry for positive electrode mixture was applied onto an aluminum foil, vacuum dried at 50°C for 5 hours to remove butyl butyrate, and then hot-pressed at 150°C for 10 minutes to prepare a positive electrode mixture layer. The results of electrode evaluation are shown in Table 2.

(Production method of cell for all-solid-state battery evaluation)

A cell for all-solid-state battery evaluation was prepared in the same manner as in Example 9 except that the positive electrode mixture layer prepared in the above manner was used as a positive electrode and a graphite electrode sheet was used as a negative electrode.

The rate characteristics evaluation and the cycle characteristics evaluation were performed in the same manner as in Example 9, and evaluation results are shown in Tables 2 and 3.

(Examples 13 and 14 and Comparative Examples 6 and 7)

A positive electrode mixture layer and a cell for all-solid-state battery evaluation were prepared in the same manner as in Example 12 except that the production conditions of the positive electrode mixture layer were changed as shown in Table 2. The evaluation results of the rate characteristics and the cycle characteristics of the cells are shown in Tables 2 and 3.

[Table 1]

(Table 1)

| | Composite formation method | Compositional ratio of electroconductive fiber | | | | Physical properties of powder | | | | | | Adhesiveness evaluation | | Comprehensive evaluation |
|---|---|---|---|---|---|---|---|---|---|---|---|---|---|---|
| | | Electroconductive fiber | | Thermoplastic resin | | Dispersibility | Powder volume resistivity | | | | Tap density (g/cm³) | Evaluation | Tensile rupture strength (MPa) | |
| | | Type | Content (% by mass) | Type | Content (% by mass) | | Evaluation | At 0.5 g/cc (Ω·cm) | At 0/8 g/cc (Ω·cm) | At 1.0 g/cc (Ω·cm) | | | | |
| Comparative Example 1 | - | CNF(i) | 100 | P(VDF-HFP) | 0 | ○ | ⊙ | 0.028 | 0.011 | 0.007 | 0.0690 | × | 0.09 | × |
| Example 1 | SD | CNF(ii) | 92 | P(VDF-HFP) | 9 | ○ | ⊙ | 0.040 | 0.014 | 0.009 | 0.0242 | △ | 0.19 | △ |
| Example 2 | Reprecipitation | CNF(ii) | 77 | P(VDF-HFP) | 23 | ○ | ⊙ | 0.126 | 0.033 | 0.018 | Not measured | - | Not measured | ⊙ |
| Example 3 | SD | CNF(ii) | 76 | P(VDF-HFP) | 24 | ○ | ⊙ | 0.078 | 0.026 | 0.016 | Not measured | - | Not measured | ⊙ |
| Example 4 | SD | CNF(i) | 75 | P(VDF-HFP) | 25 | ○ | ⊙ | 0.157 | 0.056 | 0.035 | 0.0148 | ○ | 3.87 | ⊙ |
| Example 5 | SD | CNF(i) | 62 | P(VDF-HFP) | 38 | ○ | ○ | 0.259 | 0.094 | 0.059 | 0.0152 | ○ | 4.47 | ⊙ |
| Example 6 | SD | CNF(i) | 37 | P(VDF-HFP) | 63 | △ | △ | 0.892 | 0.269 | 0.153 | 0.0109 | ○ | 3.62 | ○ |
| Comparative Example 2 | SD | CNF(i) | 22 | P(VDF-HFP) | 78 | × | × | 8.387 | 2.507 | 1.413 | 0.0191 | - | Not measured | × |
| Comparative Example 3 | Simple mixing | CNF(i) | 60 | P(VDF-HFP) *separately added | 40 | ○ | ○ | 0.346 | 0.112 | 0.066 | Not measured | △ | 2.60 | △ |

[Table 2]

(Table 2)

| | Positive electrode mixture | | | | | | | | Electroconductive auxiliary agent | | | | |
| | Positive electrode material | | Electrolyte | | Electroconductive auxiliary agent | | | | Binder | Electroconductive fiber | | Content of electroconductive fiber in positive electrode mixture (% by mass) | Thermoplastic resin | |
| | Type | Content (% by mass) | Type | Content (% by mass) | Resin-attached fiber or electroconductive fiber | Content (% by mass) | Spherical carbon | Content (% by mass) | Content (% by mass) | Type | Content (% by mass) | | Type | Content (% by mass) |
|---|---|---|---|---|---|---|---|---|---|---|---|---|---|---|
| Example 9 | Surface-coated NCM | 61.6 | LPS | 35.8 | Resin-attached fiber (Example 4) | 2.6 | | | | CNF(i) | 75 | 2.0 | P(VDF-HFP) | 25 |
| Example 10 | Surface-coated NCM | 62 | LPS | 36 | Resin-attached fiber (Example 5) | 2 | - | | | CNF(i) | 62 | 1.2 | P(VDF-HFP) | 38 |
| Example 11 | Surface-coated NCM | 61.2 | LPS | 35.5 | Resin-attached fiber (Example 5) | 3.3 | - | | | CNF(i) | 62 | 2.0 | P(VDF-HFP) | 38 |
| Comparative Example 4 | Surface-coated NCM | 62 | LPS | 36 | CNF(i) | 2 | - | | | CNF(i) | 100 | 2.0 | - | 0 |
| Comparative Example 5 | Surface-coated NCM | 62 | LPS | 36 | - | | AB | 2 | | - | | - | - | - |
| Comparative Example 6 | Surface-coated NCM | 70 | LPS | 24 | CNF(i) | 4 | - | | 2 | CNF(i) | 100 | 4.0 | - | 0 |
| Example 12 | Surface-coated NCM | 70 | LPS | 24 | Resin-attached fiber (Example 4) | 4 | - | | 2 | CNF(i) | 75 | 3.0 | P(VDF-HFP) | 25 |
| Example 13 | Surface-coated NCM | 70 | LPS | 24 | Resin-attached fiber (Example 4) | 4 | - | | 2 | CNF(i) | 75 | 3.0 | P(VDF-HFP) | 25 |

EP 4 209 632 A1

(Table 2)

| | Positive electrode mixture | | | | | | | | Electroconductive auxiliary agent | | | | |
| | Positive electrode material | | Electrolyte | | Electroconductive auxiliary agent | | | | Binder | Electroconductive fiber | | Content of electroconductive fiber in positive electrode mixture (% by mass) | Thermoplastic resin | |
| | Type | Content (% by mass) | Type | Content (% by mass) | Resin-attached fiber or electroconductive fiber | Content (% by mass) | Spherical carbon | Content (% by mass) | Content (% by mass) | Type | Content (% by mass) | | Type | Content (% by mass) |
|---|---|---|---|---|---|---|---|---|---|---|---|---|---|---|
| Example 14 | Surface-coated NCM | 70 | LPS | 24 | Resin-attached fiber (Example 4) | 3.2 | AB | 0.8 | 2 | CNF(i) | 75 | 2.4 | P(VDF-HFP) | 25 |
| Comparative Example 7 | Surface-coated NCM | 70 | LPS | 24 | - | | AB | 4 | 2 | - | | - | - | - |

[Table 3]

(continued from Table 2)

| | Positive electrode active material layer production conditions | | | Positive Electrode active material layer | | | Negative Electrode | Battery evaluation | | | | | | | | | | |
|---|---|---|---|---|---|---|---|---|---|---|---|---|---|---|---|---|---|---|
| | Press conditions | | Confined pressure | Electrode density (g/cm$^3$) | Void ratio (vol%) | Electric conductivity (S/cm) | Negative electrode material | Rate characteristics | | | | | | | | | | |
| | Temperature (°C) | Pressure (MPa) | Torque (N·m) | | | | Type | 0.1CA | 0.2CA | 0.5CA | 1CA | 2CA | 0.1CA | 0.2CA | 0.5CA | 1CA | 2CA |
| | | | | | | | | mAh/g | | | | | % | | | | |
| Example 9 | 150 | 100 | 2 | Not measured | Not measured | Not measured | Li-In | 82.2 | 77.1 | 67.2 | 50.3 | 3.7 | 100 | 94 | 82 | 61 | 5 |
| Example 10 | 150 | 100 | 2 | 2.37 | 24 | $9.0\times10^{-3}$ | Li-In | 72.4 | 66.7 | 50 | 20.9 | 0 | 100 | 92.1 | 69.0 | 28.9 | 0.0 |
| Example 11 | 150 | 100 | 2 | Not measured | Not measured | Not measured | Li-In | 75.7 | 72.1 | 64.8 | 54.2 | 22.6 | 100 | 95.3 | 85.7 | 71.6 | 29.8 |
| Comparative Example 4 | 150 | 100 | 2 | 1.98 | 36 | $2.0\times10^{-2}$ | Li-In | 81.7 | 78.3 | 70.3 | 54.1 | 0 | 100 | 95.9 | 86.1 | 66.3 | 0.0 |
| Comparative Example 5 | Room temperature | 100 | 2 | 1.94 | 38 | $1.0\times10^{-5}$ | Li-In | 12 | 8 | 3 | 0 | 0 | 100 | 66.7 | 25.0 | 0.0 | 0.0 |
| Comparative Example 6 | Room temperature | 100 | 2 | Not measured | Not measured | Not measured | Graphite | 62 | 31.4 | 10 | 2.3 | 0 | 0 | 50.6 | 16.1 | 3.7 | 0.0 |
| Example 12 | 150 | 100 | 2 | Not measured | Not measured | Not measured | Graphite | 79.5 | 66.6 | 58.1 | 39.6 | 3.35 | 0.1 | 83.8 | 73.1 | 49.8 | 4.2 |
| Example 13 | 150 | 300 | 2 | Not measured | Not measured | Not measured | Graphite | 92.7 | 87.3 | 73.8 | 54.4 | 22.3 | 2.9 | 94.2 | 79.6 | 58.7 | 24.1 |
| Example 14 | 150 | 100 | 2 | Not measured | Not measured | Not measured | Graphite | 85.6 | 72.9 | 60.1 | 29.6 | 1.2 | 0 | 85.2 | 70.2 | 34.6 | 1.4 |
| Comparative Example 7 | Room temperature | 100 | 2 | Not measured | Not measured | Not measured | Graphite | 110 | 44.6 | 7.9 | 0.4 | 0 | 0 | 40.5 | 7.2 | 0.4 | 0.0 |

22

[Table 4]

| (Table 3) | | | | | |
|---|---|---|---|---|---|
| | Positive electrode active material layer production conditions | | | Negative Electrode | Cycle characteristics @ 30 cycles |
| | Press conditions | | Confined pressure | Negative electrode material | |
| | Temperature (°C) | Pressure (MPa) | Torque (N·m) | Type | |
| Example 10 | 150 | 100 | 2 | Li-In | 94.2% |
| Comparative Example 4 | 150 | 100 | 2 | Li-In | 90.9% |
| Comparative Example 6 | Room temperature | 100 | 2 | Graphite | 59.9% |
| Example 12 | 150 | 100 | 2 | Graphite | 54.8% |
| Example 13 | 150 | 300 | 2 | Graphite | 80.8% |
| Example 14 | 150 | 100 | 2 | Graphite | 54.7% |
| Comparative Example 7 | Room temperature | 100 | 2 | Graphite | 49.3% |

**Claims**

1. Resin-attached fiber comprising:

    electroconductive fiber having an average fiber diameter of 10 to 5000 nm and an average aspect ratio of 30 or more; and
    a thermoplastic resin integrated with the electroconductive fiber by contact with at least part of surface of the electroconductive fiber, wherein
    the resin-attached fiber has a powder volume resistivity of 10 $\Omega$·cm or less at a density of 0.8 g/cm$^3$.

2. The resin-attached fiber according to claim 1, wherein a content of the thermoplastic resin is 1 to 70% by mass with respect to a total amount of the electroconductive fiber and the thermoplastic resin.

3. The resin-attached fiber according to claim 1 or 2, which has a tap density of 0.001 to 0.1 g/cm$^3$.

4. The resin-attached fiber according to any one of claims 1 to 3, wherein the thermoplastic resin has a melting point of 50 to 250°C.

5. The resin-attached fiber according to any one of claims 1 to 4, wherein the electroconductive fiber is carbon fiber or nickel fiber.

6. The resin-attached fiber according to claim 5, wherein the carbon fiber contains substantially no metal element.

7. The resin-attached fiber according to any one of claims 1 to 6, wherein the thermoplastic resin contains a fluorine atom.

8. The resin-attached fiber according to any one of claims 1 to 7, which contains the thermoplastic resin having at least a particulate shape.

9. An active material layer for non-aqueous electrolyte secondary batteries, the active material layer comprising the resin-attached fiber according to any one of claims 1 to 8.

10. An electrode for non-aqueous electrolyte secondary batteries, the electrode comprising the active material layer according to claim 9.

11. A non-aqueous electrolyte secondary battery comprising the electrode according to claim 10.

[Fig. 1]

[Fig. 2]

[Fig. 3]

# EP 4 209 632 A1

## INTERNATIONAL SEARCH REPORT

International application No.

**PCT/JP2021/031669**

### A. CLASSIFICATION OF SUBJECT MATTER

**D06M 15/256**(2006.01)i; **D01F 9/145**(2006.01)i; **H01M 4/13**(2010.01)i; **H01M 4/62**(2006.01)i; *D06M 101/40*(2006.01)n
FI: D06M15/256; D01F9/145; H01M4/13; H01M4/62 Z; D06M101:40

According to International Patent Classification (IPC) or to both national classification and IPC

### B. FIELDS SEARCHED

Minimum documentation searched (classification system followed by classification symbols)

D06M13/00-15/715; D01F9/08-9/32; H01M4/13; H01M4/62

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 11-255907 A (TORAY IND INC) 21 September 1999 (1999-09-21) claims 1, 15-16, paragraphs [0016]-[0030], [0041]-[0044], example 6 | 1-2, 4-6 |
| A | JP 2020-33687 A (TEIJIN LTD) 05 March 2020 (2020-03-05) claims, paragraphs [0032]-[0045] | 1-11 |
| A | JP 63-164165 A (MATSUSHITA ELECTRIC IND CO LTD) 07 July 1988 (1988-07-07) entire text | 1-11 |
| A | WO 2004/031465 A1 (TORAY INDUSTRIES, INC) 15 April 2004 (2004-04-15) entire text | 1-11 |
| A | WO 2014/115852 A1 (TEIJIN LIMITED) 31 July 2014 (2014-07-31) entire text | 1-11 |
| A | WO 2013/157160 A1 (TEC ONE CO., LTD) 24 October 2013 (2013-10-24) entire text | 1-11 |

☐ Further documents are listed in the continuation of Box C.  ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 October 2021** | **09 November 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

EP 4 209 632 A1

## INTERNATIONAL SEARCH REPORT
### Information on patent family members

International application No.

**PCT/JP2021/031669**

| Patent document cited in search report | | | Publication date (day/month/year) | Patent family member(s) | | | Publication date (day/month/year) |
|---|---|---|---|---|---|---|---|
| JP | 11-255907 | A | 21 September 1999 | (Family: none) | | | |
| JP | 2020-33687 | A | 05 March 2020 | CN whole document KR | 110863268 10-2020-0024102 | A A | |
| JP | 63-164165 | A | 07 July 1988 | (Family: none) | | | |
| WO | 2004/031465 | A1 | 15 April 2004 | US whole document EP CN | 2006/0166075 1548164 1703548 | A1 A1 A | |
| WO | 2014/115852 | A1 | 31 July 2014 | US whole document EP CN KR | 2015/0372309 2950375 104937757 10-2015-0109377 | A1 A1 A A | |
| WO | 2013/157160 | A1 | 24 October 2013 | US whole document EP CN KR | 2014/0091033 2703530 103562447 10-2014-0017680 | A1 A1 A A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010262764 A
- JP 2016009679 A
- WO 2014115852 A
- WO 2009125857 A